# EUROPÄISCHE PATENTANMELDUNG

(11) **EP 0 542 213 A2**
(43) Veröffentlichungstag der Anmeldung: **19.05.1993**
(21) Anmeldenummer: 92119254.8
(22) Anmeldetag: 11.11.1992
(51) Int. Cl.: H02K 5/24, H02K 5/00, F04D 29/66, F16F 1/36

(54) **Einseitige Befestigung eines Stators eines bürstenlosen Gleichstrommotors an einem Gehäuseteil**

(30) Priorität: 14.11.1991 DE 4137465
(71) Anmelder: Licentia Patent-Verwaltungs-GmbH, D-60596 Frankfurt (DE)
(72) Erfinder: Oltmanns, Karl-Heinz, Dipl.-Ing., W-2900 Oldenburg (DE); Witthohn, Lutz, Dipl.-Ing., W-2900 Oldenburg (DE); Tillner, Siegfried, Dipl.-Ing., W-2900 Oldenburg (DE)
(74) Vertreter: Vogl, Leo, Dipl.-Ing.

(57) **Zusammenfassung**

Die Erfindung betrifft eine einseitige Befestigung eines Stators (2) eines bürstenlosen Gleichstrommotors (1) an einem Gehäuseteil (3), wobei eine feststehende Statorwelle (7) an ihrem einen Ende (9) einen drehbar gelagerten Rotor (15) und an ihrem anderen freien Ende (17) ein fest angeordnetes Flanschteil (19) zum Verbinden des Stators (2) mit dem Gehäuseteil (3) aufweist. Bei bekannten bürstenlosen Gleichstrommotoren treten hierbei Geräusche auf, welche einerseits durch die magnetischen Rastelemente bzw. durch die läuferstellungsabhängigen Radialkräfte erzeugt werden und andererseits durch das Zusammenwirken zwischen Stator und Rotor beim Umschalten der Spulen auftreten. Die bei niedrigen Drehzahlen infolge der Kommutierung entstehenden Geräusche werden erfindungsgemäß dadurch reduziert, daß das Flanschteil (19) mehrere, zu der Statorwelle (7) konzentrisch angeordnete Gewindebohrungen (21) aufweist, in die Schraubenbolzen (27) von in dem Gehäuseteil (3) gedämpft gelagerten Schrauben (29) einschraubbar sind. Hierdurch wird mit einfachen und leicht zu montierenden Mitteln eine gedämpfte Statorbefestigung geschaffen, bei der die höherfrequenten Anteile des Frequenzinhaltes jedes einzelnen Impulses wirksam geschwächt werden.

## Beschreibung

Die Erfindung betrifft eine einseitige Befestigung eines Stators eines bürstenlosen Gleichstrommotors an einem Gehäuseteil der im Oberbegriff des Patentanspruchs 1 angegebenen Art.

Bei bürstenlosen Gleichstrommotoren treten Geräusche auf, welche einerseits durch die magnetischen Rastmomente bzw. durch die läuferstellungsabhängigen Radialkräfte erzeugt werden und andererseits durch das Zusammenwirken Zwischen Stator und Rotor beim Umschalten der Spulen auftreten. Diese magnetisch erregten Geräusche können durch eine geeignete Dimensionierung des magnetischen Kreises und der Schrägung von Statorwicklung bzw. Rotormagnetisierung auf ein Minimum reduziert werden. Die durch das Umschalten der Spule bedingten Geräusche sind für eine dreisträngige Brückenschaltung in der Figur 5 dargestellt. Die in der Bestromung der einzelnen Stränge erkennbaren Einbrüche lassen sich durch eine schnelle Stromregelung bis auf einen sehr kurzzeitigen Einbruch reduzieren. Es bleibt jedoch bei jedem Kommutierungsvorgang ein Drehmomentimpuls, der periodisch und der zwei pm-fachen Umdrehungsfrequenz auftritt und besonders bei niedrigen Drehzahlen störend sein kann.

Der Erfindung liegt die Aufgabe zugrunde, die bei niedrigen Drehzahlen infolge der Kommutierung entstehenden Geräusche mit kostengünstigen Mitteln wirksam zu reduzieren. Diese Aufgabe wird durch die im Patentanspruch 1 gekennzeichneten Merkmale gelöst.

Die gedämpfte Statorbefestigung schwächt die höher frequenten Anteile des Frequenzinhaltes jedes einzelnen Impulses. Der Frequenzinhalt jedes einzelnen Impulses deckt fast das ganze hörbare Spektrum ab. Diese Dämpfung erlaubt nach wie vor einen relativ maßgenauen, harten Einbau. Durch eine geeignete Wahl der Werkstoffe kann diese Dämpfung in einem Temperaturbereich von minus 30 bis plus 80 Grad Celsius wirksam sein.

Die Erfindung wird anhand eines Ausführungsbeispiels im folgenden näher beschrieben. Es zeigen:
- Figur 1: einen Schnitt durch ein Gebläsegehäuse,
- Figur 2: eine Seitenansicht auf das Gebläse,
- Figur 3: eine Einzelheit aus Figur 2,
- Figur 4: eine schaubildliche Ansicht auf das Flanschteil und
- Figur 5: den Verlauf der Bestromung einer dreisträngigen Brückenschaltung.

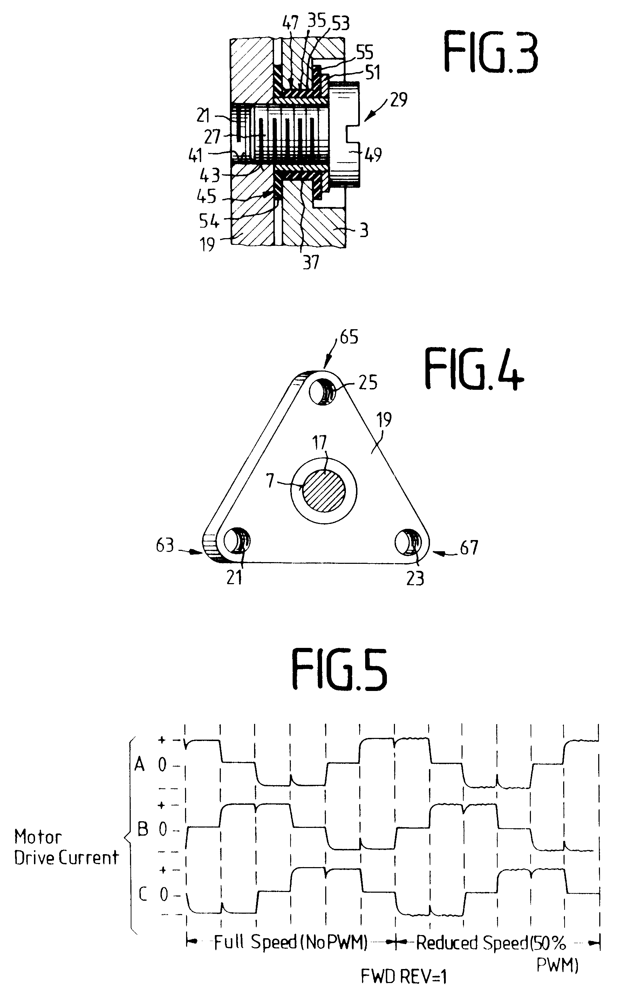

In den Figuren wird eine einseitige Befestigung des Stators 2 eines als Außenläufermotor ausgebildeten bürstenlosen Gleichstrommotors 1 an einem Gehäuseteil 3 eines Gebläsegehäuses 5 dargestellt. Hierbei weist eine feststehende Statorwelle 7 an ihrem einen Ende 9 einen mittels zweier Kugellager 11, 13 drehbar gelagerten Rotor 15 und an ihrem anderen freien Ende 17 ein fest angeordnetes Flanschteil 19 zum Verbinden des Stators 2 mit dem Gehäuseteil 3 auf. Dieses Flanschteil 19 hat mehrere, zu der Statorwelle 7 konzentrisch angeordnete Gewindebohrungen 21, 23, 25, in die Schraubbolzen 27 von in dem Gehäuseteil 3 gedämpft gelagerten Schrauben 29, 31, 33 einschraubbar sind, siehe Figuren 3 und 4.

Am Rotor 15 ist eine abgekröpfte Scheibe 16 befestigt, die als Träger eines mit Schaufeln 18 versehenen Gebläserades 20 dient. Der auf der feststehenden Statorwelle 7 drehbar gelagerte Rotor 15 weist in bekannter Weise Permanentmagnete 22 auf.

Das mit dem Flanschteil zu verbindende Gehäuseteil 3 des Gebläsegehäuses 5 besteht aus einem wärmeleitenden Material, z. B. aus Aluminium und hat Aufnahmebohrungen 35, von denen in der Figur 3 nur eine dargestellt ist, für Stahlhülsen 37. Die Innendurchmesser 41 dieser Stahlhülsen 37 entsprechen den Außendurchmessern 43 der Schraubbolzen 27 derart, daß diese leicht und sicher in die Stahlhülsen einführbar sind. Weiterhin sind Dämpfungselemente 45, 47 zwischen den Außendurchmessern 43 der Stahlhülsen 37 und den Aufnahmebohrungen 35 angeordnet. Die Stahlhülsen 37 weisen an ihren mit den zylindrisch ausgebildeten Schraubköpfen 49 der Schraube 29 zusammenwirkenden Enden fest angeordnete, ringförmige Flanschteile 51 auf, welche auch mit den Stahlhülsen 37 einstückig ausgebildet sein können. Die Außendurchmesser dieser Flanschteile 51 sind größer als die Durchmeser der Aufnahmebohrungen 35 ausgebildet. Die Dämpfungselemente 47 umgeben die Stahlhülsen 37 spielfrei und bestehen aus je einem Hohlzylinderteil 53 und einem an dessem dem Schraubenkopf 49 zugewandten Ende integriert angeordneten Flanschteil 55. Das andere Ende des Hohlzylinderteiles 53 wird von dem Dämpfungselement 45 umgeben, das als Dämpfungsringscheibe 54 ausgebildet ist und unmittelbar an dem Hohlzylinderteil 53 anschließt. Diese Dämpfungsringscheibe 54 ist auch als Dämpfungselement zwischen dem Flanschteil 19 und dem Gehäuseteil 3 wirksam. Die Dämpfungselemente (45, 47) bestehen aus einem Dämpfungsmaterial, z. B. aus einem hochpolymeren Fluor-Elastomer, mit einer Shorehärte von 70 bis 80.

Das Gehäuseteil 3 weist übrigens Trägerholme 57, 59, 61 auf, in denen die Aufnahmebohrungen 35 angeordnet sind. Diese Trägerholme 57, 59, 61 weisen um die Aufnahmebohrungen 35 zylindrisch ausgebildete Vertiefungen zur Aufnahme der Flanschteile 51 und 55 an den Stahlhülsen 37 und an den Dämpfungselementen und der Schraubenköpfe 49 auf.

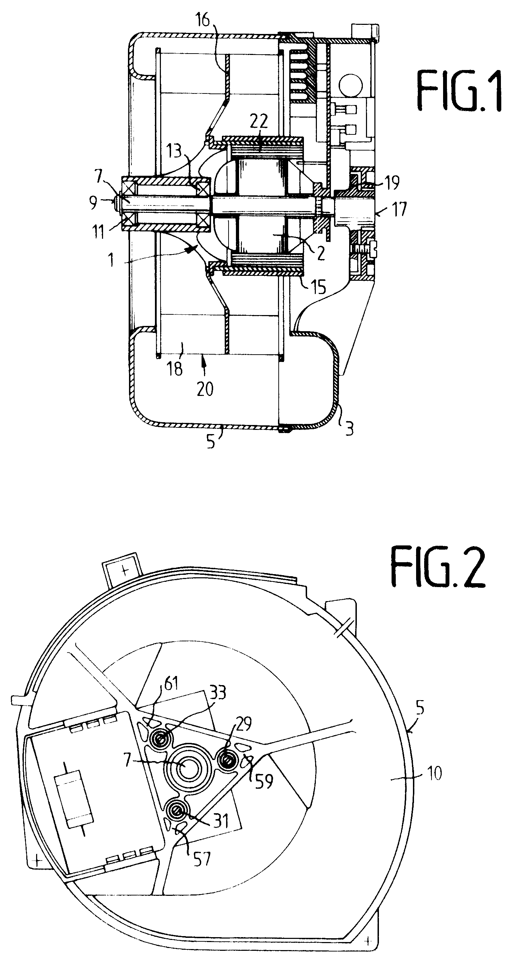

Gemäß den Figuren 2 und 4 ist das mit der Statorwelle 7 fest verbundene Flanschteil 19 mit drei um 120 Grad zueinander versetzt angeordneten Gewindebohrungen 21, 23, 25 versehen, während das Gehäuseteil 3 drei entsprechend angeordnete Trägerholme 57, 59, 61 mit je einer Aufnahmebohrung 35 mit darin gelagerten Dämpfungselementen und Stahlhülsen 37 aufweist. Das Flanschteil 19 ist z. B. dreieckförmig ausgebildet, in deren abgerundeten Ecken 63, 65, 67 die Gewindebohrungen 21, 23, 25 angeordnet sind.

Im Rahmen der Erfindung können die Dämmungselemente 45, 47 zwischen den Stahlhülsen 37 und den Aufnahmbebohrungen 35 und zwischen dem Flanschteil 19 und dem Gehäuseteil 3 einstückig ausgebildet sein.

Die einseitig gedämpfte Befestigung des Stators 2 an dem Gehäuseteil 3 eines Gebläsegehäuses 5 besteht aus einfachen und leicht zu montierenden Einzelteilen, welche eine wirksame Dämpfung von Schwingungen ermöglichen. Auch bei niedrigen Drehzahlen werden die höherfrequenten Anteile des Frequenzinhaltes jedes einzelnen Impulses derart gedämpft, daß die Geräusche gegenüber den bekannten Befestigungen wirsam reduziert werden.

## Patentansprüche

1. Einseitige Befestigung des Stators eines bürstenlosen Gleichstrommotors an einem Gehäuseteil, insbesondere eines Gebläsegehäuses, wobei eine feststehende Statorwelle an ihrem einen Ende einen drehbar gelagerten Rotor und an ihrem anderen freien Ende ein fest angeordnetes Flanschteil zum Verbinden des Stators mit dem Gehäuseteil aufweist, **dadurch gekennzeichnet,** daß das Flanschteil (19) mehrere, zu der Statorwelle (7) konzentrisch angeordnete Gewindebohrungen (21, 23, 25) aufweist, in die Schraubenbolzen von in dem Gehäuseteil (3) gedämpft gelagerten Schrauben (29, 31, 33) einschraubbar sind.

2. Befestigung nach Anspruch 1, **dadurch gekennzeichnet,** daß das mit dem Flanschteil (19) zu verbindende Gehäuseteil (3) des Gehäuses (5) aus einem wärmeleitenden Material besteht und Aufnahmebohrungen (35) für Stahlhülsen (37), deren Innendurchmesser (41) den Außenmaßen der Schraubbolzen (27) entsprechen, aufweist und daß Dämpfungselemente (45, 47) zwischen den Außendurchmessern (43) der Stahlhülsen (37) und den Aufnahmebohrungen (35) angeordnet sind.

3. Befestigung nach Anspruch 2, **dadurch gekennzeichnet,** daß die Stahlhülsen (37) an ihren mit den zylindrischen Schraubköpfen (49) zusammenwirkenden Enden fest angeordnete Flanschteile (51) aufweisen, deren Außendurchmesser größer als die Durchmesser der Aufnahmebohrungen (35) ausgebildet sind.

4. Befestigung nach Anspruch 2 oder 3, **dadurch gekennzeichnet,** daß die Dämpfungselemente (47) aus die Stahlhülsen (37) umgebenden Hohlzylinderteilen (53) und an deren den Schraubköpfen (49) zugewandten Enden integeriert ausgebildeten Flanschteilen (55) bestehen und daß die anderen Enden der Hohlzylinderteile (53) von Dämpfungsringscheiben (54) umschlossen sind, welche zwischen dem Flanschteil (19) und dem Gehäuseteil (3) wirksam angeordnet sind.

5. Befestigung nach einem der vorhergehenden Ansprüche, **dadurch gekennzeichnet,** daß die Dämpfungselemente (45, 47) aus einem Dämpfungsmaterial, z. B. aus einem hochpolymeren Fluor-Elastomer mit einer Shore-Härte von 70 bis 80 bestehen.

6. Befestigung nach einem der vorhergehenden Ansprüche, **dadurch gekennzeichnet,** daß die Aufnahmebohrungen (35) in Trägerholmen (57, 59, 61) des Gehäuseteiles (3) angeordnet sind.

7. Befestigung nach Anspruch 6, **dadurch gekennzeichnet,** daß die Trägerholme (57, 59, 61) um die Aufnahmebohrungen (35) zylindrische Vertiefungen (63) zur Aufnahme der Flanschteile (51, 55) an den Stahlhülsen (37) und an den Dämpfungselementen und der Schraubenköpfe (29) aufweisen.

8. Befestigung nach einem der vorhergehenden Ansprüche, **dadurch gekennzeichnet,** daß das mit der Statorwelle (7) fest verbundene Flanschteil (19) drei um 120 Grad zueinander versetzt angeordnete Gewindebohrungen (21, 23, 25) und das Gehäuseteil (3) drei entsprechend angeordnete Trägerholme (57, 59, 61) mit je einer Aufnahmebohrung (35) aufweisen.

9. Befestigung nach Anspruch 8, **dadurch gekennzeichnet,** daß das Flanschteil (19) dreieckförmig ausgebildet ist, in dessen abgerundeten Ecken (63, 65, 67) die Gewindebohrungen (21, 23, 25) angeordnet sind.

10. Befestigung nach einem der vorhergehenden Ansprüche, **dadurch gekennzeichnet,** daß die Dämpfungselemente (45, 47) zwischen den Stahlhülsen (37) und den Aufnahmebohrungen (35) und zwischen dem Flanschteil (19) und dem Gehäuseteil (3) einstückig ausgebildet sind.
